# EUROPÄISCHE PATENTSCHRIFT

(11) **EP 0 586 920 B1**
(45) Veröffentlichungstag und Bekanntmachung des Hinweises auf die Patenterteilung: **18.10.1995**
(21) Anmeldenummer: 93112986.0
(22) Anmeldetag: 13.08.1993
(51) Int. Cl.: F16B 12/20

(54) **Verbindungsbeschlag zum lösbaren Verbinden zweier Möbelteile**
Connecting device for the releasable connection of two furniture parts
Ferrure pour l'assemblage démontable de deux éléments d'ameublement

(30) Priorität: 09.09.1992 DE 9212129 U
(43) Veröffentlichungstag der Anmeldung: 16.03.1994
(73) Patentinhaber: PAUL HETTICH GMBH & CO., D-32278 Kirchlengern (DE)
(72) Erfinder: Brinkmann, Manfred, D-32609 Hüllhorst (DE)
(74) Vertreter: Stracke, Alexander, Dipl.-Ing.

(56) Entgegenhaltungen:
- WO-A-85/01996
- DE-A- 2 855 216
- DE-A- 3 314 744
- DE-C- 662 635
- FR-A- 1 467 282
- FR-A- 2 160 182

## Beschreibung

Die vorliegende Erfindung betrifft einen Verbindungsbeschlag zum lösbaren Verbinden zweier Möbelteile, bestehend aus einem an einem ersten Möbelteil festlegbarem Gehäuse mit einem darin drehbar angeordneten und mit Hinterschneidungen sowie einer radialen Einführöffnung versehenen Spannexzenter und einem an einem zweiten Möbelteil festlegbaren Befestigungsstück mit einem Spannkopf, der durch die Einführöffnung in den Spannexzenter einsteckbar ist und dessen Spannkopf bei angezogenem Spannexzenter von dessen Hinterschneidungen hintergriffen ist.

Verbindungsbeschläge der vorerwähnten Art sind in vielerlei Ausführungsformen bekannt.

Ganz allgemein besteht der Wunsch, derartige Verbindungsbeschläge so zu gestalten, daß schon nach dem Einführen des Spannbolzens in den Spannexzenter eine gewisse Vorfixierung erreicht wird, d. h., daß nach dem provisorischen Zusammenfügen von Spannexzenter und Spannbolzen ein unbeabsichtigtes Lösen dieser beiden zusammenwirkenden Bauteile nicht mehr möglich ist.

Sinngemäß liegt der vorliegenden Erfindung die Aufgabe zugrunde, einen Verbindungsbeschlag der gattungsgemäßen Art mit einfachen, konstruktiven Mitteln so zu gestalten, daß eine derartige Vorfixierung erreicht wird, ohne das hierfür Aufmerksamkeit erfordernde Manipulationen erforderlich sind.

Diese Aufgabe wird bei einem Verbindungsbeschlag der gattungsgemäßen Art dadurch gelöst, daß
a) der Spannexzenter axial federnd im Gehäuse gelagert ist,
b) der Spannexzenter an seinem Umfang mit einem Führungsnocken und einem Stütznocken versehen ist, wobei der Führungsnocken bei in Spannstellung gedrehtem Spannexzenter in einer gehäuseseitigen Nut geführt ist und der Stütznocken bei in Lösestellung verdrehtem Spannexzenter auf einem in einem Endbereich der Nut liegenden stufenartigen Absatz aufliegt, so daß der Spannexzenter in diesen möglichen Drehstellungen axial fixiert ist,
c) der Spannexzenter im Bereich seiner Einführöffnung einen Mitnehmer und einen Arretierungsabschnitt aufweist,
d) der Mitnehmer beim Herausziehen des Spannbolzens vom Spannkopf betätigbar ist, so daß der Stütznocken vom stufenartigen Absatz gelöst und der Spannexzenter in eine axial bewegliche Montagestellung bewegt wird, in welcher der Arretierungsabschnitt im Einschubbereich des Spannkopfes liegt.

Ein derart gestalteter Verbindungsbeschlag weist den Vorteil auf, daß der Spannexzenter nach einem Lösen des Verbindungsbeschlages ohne besondere Manipulationen durch den Monteur immer eine Stellung einnimmt, in der beim erneuten Einführen des Spannbolzens eine Vorfixierung erreicht wird. Lediglich bei der Erstmontage ist es erforderlich, den Spannexzenter in eine Position zu drehen, in der der Spannexzenter axial beweglich ist, und der Arretierungsabschnitt des Spannexzenters im Einschubbereich des Spannkopfes liegt.

Ist hingegen der Verbindungsbeschlag aus einer Verbindungsstellung heraus gelöst worden, stellt sich diese Montagestellung mit der anschließenden Vorfixierung gewissermaßen selbsttägig ein, da beim Trennen des Spannbolzens vom Spannexenter dieser sozusagen automatisch in die für eine gewünschte Vorfixierung erforderliche Stellung bewegt wird.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1: eine Teildarstellung zweier miteinander zu verbindender Möbelteile mit vormontierten Beschlagteilen eines erfindungsgemäßen Verbindungsbeschlages,
- Figur 2: eine Vorderansicht eines zur Aufnahme eines Spannexzenters bestimmten Gehäuses des Verbindungsbeschlages nach Figur 1,
- Figur 3: eine Teilansicht auf eine Hälfte des geteilten Gehäuses in Richtung des Pfeiles III in Figur 1, dargestellt mit im Gehäuse angeordneten Spannexzenter,
- Figur 4: eine Draufsicht auf den Spannexzenter gemäß Figur 3,
- Figur 5: eine Ansicht in Richtung des Pfeiles V in Figur 4,
- Figur 6: eine Ansicht in Richtung des Pfeiles VI in Figur 4,
- Figur 7: eine Ansicht in Richtung des Pfeiles VII in Figur 4, teilweise im Schnitt dargestellt,
- Figur 8: einen Schnitt nach der Linie VIII-VIII in Figur 7,
- Figuren 9 - 11: schematische Darstellungen der wesentlichsten Bauteile eines Verbindungsbeschlages nach einem weiteren Ausführungsbeispiel der Erfindung, gezeigt in der Montagestellung,
- Figuren 12 bis 14: schematische Darstellungen des Verbindungsbeschlages nach den Figuren 9 bis 11 in der Demontagestellung,
- Figuren 15 bis 17: schematische Darstellungen des Verbindungsbeschlages in Spannstellung.

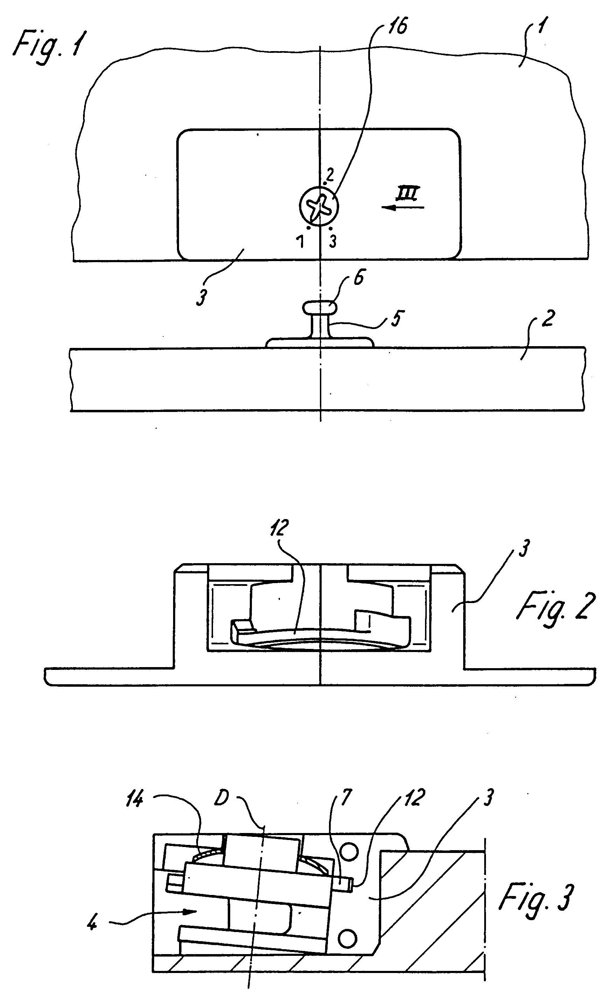

Der in den Figuren 1 bis 3 gezeigte Verbindungsbeschlag zum lösbaren Verbinden zweier Möbelteile 1 und 2 besteht im wesentlichen aus einem am ersten Möbelteil 1 festlegbaren Gehäuse 3 mit einem darin drehbar angeordneten Spannexzenter 4 sowie aus einem am zweiten Möbelteil 2 festlegbaren Befestigungsstück 5 mit einem Spannkopf 6.

Der Spannexzenter 4 ist in bekannter Weise im Gehäuse 3 drehbar gelagert und mit exzentrisch zur Drehachse verlaufenden Hinterschneidungen versehen, die dem Spannkopf 6 des Befestigungsstücks 5 in Montagestellung hintergreifen, wobei auf die Darstellung dieser Hinterschneidungen der Übersichtlichkeit halber verzichtet wurde, da sich der erfindungsgemäße Verbindungsbeschlag in dieser Hinsicht von bekannten Beschlägen dieser Art nicht unterscheidet.

Wie schon aus Figur 3 hervorgeht, ist die Drehachse D des Spannexzenters 4 (sh. Figur 3) gegenüber den parallel zueinander verlaufenden Grundflächen des Gehäuses 3 geneigt angeordnet. Auf die Bedeutung dieser Neigung der Drehachse D wird später noch eingegangen.

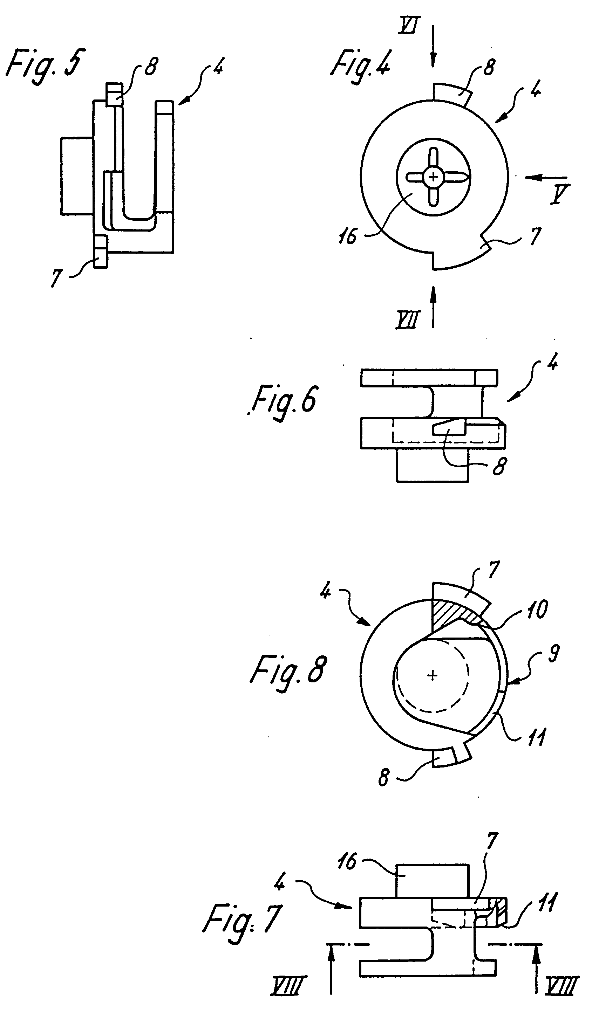

Wie aus den Figuren 4 bis 8 hervorgeht, ist der Spannexzenter 4 an seinem Umfang mit einem Führungsnocken 7 und einem Stütznocken 8 versehen. Der Stütznocken 8 ist gegenüber dem Führungsnocken 7 in Umfangsrichtung und in der Höhe versetzt angeordnet.

Wie die Figuren 7 und 8 besonders anschaulich zeigen, ist im Bereich einer Einführöffnung 9, durch die der Befestigungsstück 5 mit seinem Spannkopf 6 in den Spannexzenter 4 einführbar ist, ein Mitnehmer 10 und ein Arretierungsringabschnitt 11 angeordnet.

Das Gehäuse 3 ist mit einer Nut 12 versehen, in welcher der Führungsnocken 7 geführt ist, wenn der Spannexzenter in eine Spannstellung gedreht wird.

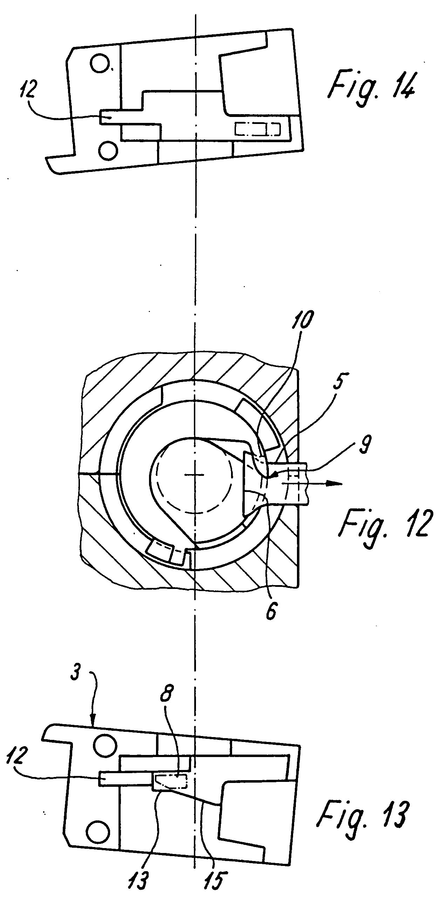

An einem Ende dieser Nut 12 ist, was die Figuren 11, 13 und 16 deutlich zeigen, ein stufenförmiger Absatz 13 angeordnet.

Insgesamt ist der Spannexzenter 4 axial beweglich im Gehäuse 3 gelagert und durch eine Feder 14 (sh. Figur 3) belastet.

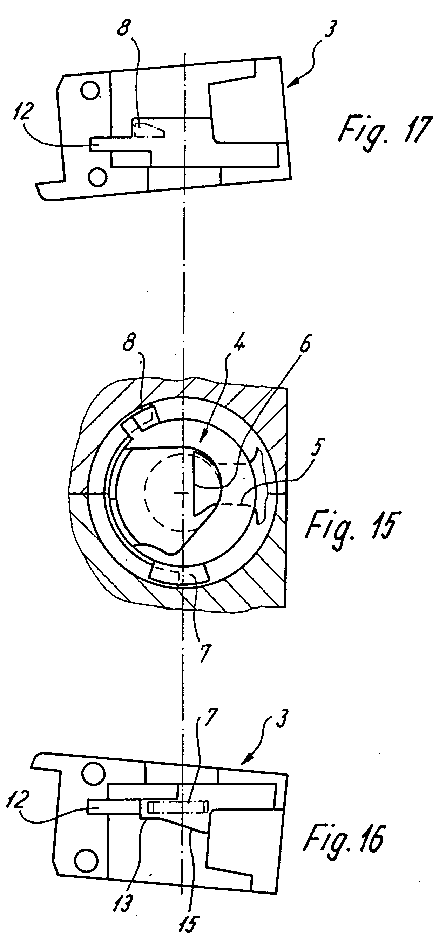

Greift der Führungsnocken 7 in die Nut 12 des Gehäuses 3 ein, ist die axiale verschiebbarkeit des Spannexzenters 4 innerhalb des Gehäuses 3 aufgehoben. Das gleiche gilt wenn sich der Stütznocken 8 des Spannexzenters 4 auf dem stufenartigen Absatz 13 des Gehäuses 3 abstützt, wie dies aus Figur 13 hervorgeht. Der Führungsnocken 7 ist, wie schon weiter oben erwähnt wurde, dann in der Nut 12 geführt, wenn der Spannexzenter in Spannstellung gedreht wird, während sich der Stütznocken 8 dann auf dem stufenartigen Absatz 13 abstützt, wenn der Spannexzenter 4 vollkommen in seine Lösestellung gedreht ist. Diese letztgenannte Position ist in den Figuren 12 bis 14 dargestellt. Es sei darauf hingewiesen, daß in dieser Lösestellung der Führungsnocken 7 vollkommen aus dem Führungsbereich der Nut 12 herausgedreht ist, wie Figur 14 deutlich zeigt.

Wird nun in der Lösestellung gemäß den Figuren 12 bis 14 der Befestigungsstück 5 mit seinem Spannkopf 6 aus der Einführöffnung 9 des Spannexzenters 4 herausgezogen, stößt der Spannkopf 6 mit seiner Rückseite an den Mitnehmer 10 des Spannexzenters, so daß sich dieser etwas in Umfangsrichtung verdreht, wobei dann der Stütznocken 8 vom stufenartigen Absatz 13 wegbewegt und längs einer Führungsschräge 15 nach unten gleitet, unterstützt durch die Wirkung der Feder 14. In diesem Zusammenhang sei darauf hingewiesen, daß die Schrägstellung der Drehachse D des Spannexzenters die gewollte Drehbewegung des Spannexzenters - wie vorstehend beschrieben - unterstützt bzw. erleichtert.

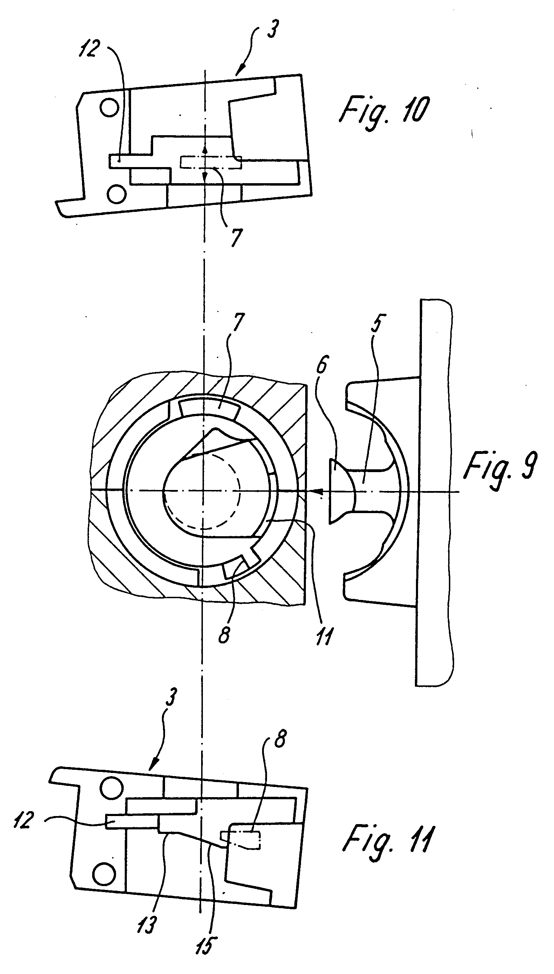

Der Spannexzenter nimmt nun die aus den Figuren 9 bis 11 ersichtliche Position ein, in welcher weder der Führungsnocken 7 noch der Stütznocken 8 in irgendeiner Weise abgestützt oder geführt sind, so daß der Spannexzenter in Grenzen axial beweglich innerhalb des Gehäuses 3 liegt. Weiterhin liegt in dieser Stellung der Arretierungsringabschnitt 11 im Einschubbereich des Spannkopfes 6 des Befestigungsstücks 5. Durch die Möglichkeit des Spannexzenters innerhalb des Gehäuses 3 axial bewegt werden zu können, kann der Spannexzenter mit seinem Arretierungsringabschnitt 11 beim Einführen des Spannkopfes 6 geringfügig axial ausweichen und nach Überwindung des Arretierungsringabschnittes 11 durch den Spannkopf 6 bewegt sich dieser Arretierungsringabschnitt 11 wieder in seine Fixierstellung, so daß nun ein Herausziehen des Befestigungsstücks 5 aus dem Spannexzenter 4 nicht mehr möglich ist, da nun der Spannkopf 6 von dem Arretierungsringabschnitt 11 hintergriffen wird. Dies bedeutet, daß in dieser Vormontagestellung eine Vorfixierung der beiden Beschlagteile erreicht ist, d. h., eine unbeabsichtigte Trennung der beiden Beschlagteile ist wirksam verhindert. Zur endgültigen Montage ist es nun nur noch erforderlich, den Spannexzenter in bekannter Weise so weit zu drehen, daß die Hinterschneidungen dieses Spannexzenters den Spannkopf 6 unter Erzielung einer Anzugskraft hintergreifen.

Lediglich bei einer Erstmontage ist dafür zu sorgen, daß der Spannexzenter die aus den Figuren 9 bis 11 ersichtliche Montagestellung einnimmt. Um dies zu erleichtern, ist im Bereich des Betätigungszapfens 16 der Außenseite des Gehäuses 3 eine beispielsweise durch Ziffern gekennzeichnete Markierung angebracht, was Figur 1 besonders deutlich zeigt. Ein Monteur weiß also jederzeit in welche Grundposition er den Spannexzenter zu drehen hat, um eine erste Montage der beiden Beschlagteile durchführen zu können.

## Patentansprüche

1. Verbindungsbeschlag zum lösbaren Verbinden zweier Möbelteile, bestehend aus einem an einem ersten Möbelteil festlegbaren Gehäuse mit einem darin drehbar angeordneten und mit Hinterschneidungen sowie einer radialen Einführöffnung versehenen Spannexzenter und einem an einem zweiten Möbelteil festlegbaren Befestigungsstück mit einem Spannkopf, der durch die Einführöffnung in den Spannexzenter einsteckbar ist und dessen Spannkopf bei angezogenem Spannexzenter von dessen Hinterschneidungen hintergriffen ist, **dadurch gekennzeichnet**, daß
a) der Spannexzenter (4) axial federnd im Gehäuse (3) gelagert ist,
b) der Spannexzenter (4) an seinem Umfang mit einem Führungsnocken (7) und einem Stütznocken (8) versehen ist, wobei der Führungsnocken (7) bei in Spannstellung gedrehtem Spannexzenter (4) in einer gehäuseseitigen Nut (12) geführt ist und der Stütznocken (8) bei in Lösestellung verdrehtem Spannexzenter (4) auf einem in einem Endbereich der Nut (12) liegenden stufenartigen Absatz (13) aufliegt, so daß der Spannexzenter (4) in diesen möglichen Drehstellungen axial fixiert ist,
c) der Spannexzenter (4) im Bereich seiner Einführöffnung (9) einen Mitnehmer (10) und einen Arretierungsringabschnitt (11) aufweist,
d) der Mitnehmer (10) beim Herausziehen des Spannbolzens (5) vom Spannkopf (6) betätigbar ist, so daß der Stütznocken (8) vom stufenartigen Absatz (13) gelöst und der Spannexzenter (4) in eine axial beweglich Montagestellung bewegt wird, in welcher der Arretierungsringabschnitt (11) im Einschubbereich des Spannkopfes (6) liegt.

2. Verbindungsbeschlag nach Anspruch 1, dadurch gekennzeichnet, daß die Drehachse D des Spannexzenters (4) gegenüber den Grundflächen des Gehäuses (3) geneigt angeordnet ist.

3. Verbindungsbeschlag nach Anspruch 1 oder 2, dadurch gekennzeichnet, daß der Spannexzenter (4) entgegen der Wirkung einer Feder (14) innerhalb des Gehäuses (3) axial bewegbar ist.

4. Verbindungsbeschlag nach einem der vorhergehenden Ansprüche, dadurch gekennzeichnet, daß sich an den stufenartigen Absatz (13) eine nach unten gerichtete Führungsschräge (15) anschließt.

## Claims

1. A connecting fitment for releasably connecting two portions of an article of furniture, comprising a housing which can be fixed to a first portion of the article of furniture, the housing having a clamping eccentric which is arranged rotatably in the housing and which is provided with undercut configurations and a radial insertion opening, and a fixing portion which can be fixed to a second portion of the article of furniture, having a clamping head which can be fitted through the insertion opening into the clamping eccentric and whose clamping head has the undercut configurations of the clamping eccentric engaging therebehind when the clamping eccentric is tightened, characterised in that
a) the clamping eccentric (4) is axially resiliently mounted in the housing (3),
b) at its periphery the clamping eccentric (4) is provided with a guide projection (7) and a support projection (8), wherein when the clamping eccentric (4) is rotated into the clamping position the guide projection (7) is guided in a groove (12) in the housing and when the clamping eccentric (4) is rotated into the release position the support projection (8) bears against a step-like shoulder (13) disposed in an end region of the groove (12) so that the clamping eccentric (4) is axially fixed in those possible rotational positions,
c) in the region of its insertion opening (9) the clamping eccentric (4) has an entrainment portion (10) and an arresting ring portion (11), and
d) when the clamping pin (5) is pulled out the entrainment portion (10) can be actuated by the clamping head (6) so that the support projection (8) is released from the step-like shoulder (13) and the clamping eccentric (4) is moved into an axially movable assembly position in which the arresting ring portion (11) is in the insertion region of the clamping head (6).

2. A connecting fitment according to claim 1 characterised in that the axis of rotation D of the clamping eccentric (4) is arranged inclinedly relative to the base surfaces of the housing (3).

3. A connecting fitment according to claim 1 or claim 2 characterised in that the clamping eccentric (4) is movable axially within the housing (3) against the force of a spring (14).

4. A connecting fitment according to one of the preceding claims characterised in that a downwardly directed inclined guide surface (15) adjoins the step-like shoulder (13).

## Revendications

1. Ferrure de liaison destinée à relier de façon amovible deux parties de meuble, constituée d'un boîtier susceptible d'être fixé à une première partie de meuble et équipé d'un excentrique de serrage, monté tournant à l'intérieur de celui-ci et pourvu de contre-dépouilles et d'une ouverture d'insertion radiale, et constituée d'un organe de fixation susceptible d'être fixé à une deuxième partie de meuble, pourvu d'une tête de serrage susceptible d'être enfilée à travers l'ouverture d'insertion dans l'excentrique de serrage et dont la tête de serrage, lorsque l'excentrique de serrage est serré, est saisie par ses contre-dépouilles, caractérisée en ce que
a) l'excentrique de serrage (4) est logé de façon élastique en direction axiale à l'intérieur du boîtier (3),
b) l'excentrique (4), sur sa circonférence, est pourvu d'une came de guidage (7) et d'une came d'appui (8), la came de guidage (7), lorsque l'excentrique de serrage (4) a été tourné en position de serrage, étant guidée dans une rainure (12) située du côté du boîtier et la came d'appui (8), lorsque l'excentrique de serrage (4) a été tourné en position désserrée, reposant contre un épaulement (13) en escalier situé dans une zone terminale de la rainure (12), de telle sorte que l'excentrique de serrage (4) soit fixé axialement dans ces positions angulaires possibles,
c) l'excentrique de serrage (4) présente, dans la zone de son ouverture d'insertion (9), un toc d'entraînement (10) et une portion d'anneau d'arrêt (11),
d) le toc d'entraînement (10), lorsque le boulon de serrage (5) est retiré de la tête de serrage (6), est actionnable de telle sorte que la came d'appui (8) soit dégagée de l'épaulement (13) en escalier et que l'excentrique de serrage (4) soit amené dans une position de montage axialement mobile, dans laquelle la portion d'anneau d'arrêt (11) se trouve dans la zone d'introduction de la tête de serrage (6).

2. Ferrure de liaison selon la revendication 1, caractérisée en ce que l'axe de rotation D de l'excentrique de serrage (4) est incliné par rapport aux surfaces de base du boîtier (3).

3. Ferrure de liaison selon la revendication 1 ou 2, caractérisée en ce que l'excentrique de serrage (4) est axialement mobile à l'intérieur du boîtier (3), à l'encontre de l'action d'un ressort (14).

4. Ferrure de liaison selon l'une des revendications précédentes, caractérisée en ce qu'une partie oblique de guidage (15), orientée vers le bas, fait suite à l'épaulement en escalier (13).
